# EUROPÄISCHE PATENTANMELDUNG

(11) **EP 3 805 877 A1**
(43) Veröffentlichungstag der Anmeldung: **14.04.2021**
(21) Anmeldenummer: 19201670.7
(22) Anmeldetag: 07.10.2019
(51) Int. Cl.: G05B 19/042, G05B 9/02

(54) **VERFAHREN ZUR EINBINDUNG EINES PRODUKTIONSMODULS IN EIN MODULARES PRODUKTIONSSYSTEM, PRODUKTIONSMODUL UND PRODUKTIONSSYSTEM**

(71) Anmelder: Siemens Aktiengesellschaft, 80333 München (DE)
(72) Erfinder: Bär, Felix, 90461 Nürnberg (DE); Graf, Rene, 90513 Zirndorf (DE); Gross, Ralf, 90471 Nürnberg (DE); Loskyll, Matthias, 92318 Neumarkt (DE); Meyer, Thomas Alexander, 90471 Nürnberg (DE); Peschke, Jörn, 90489 Nürnberg (DE)

(57) **Zusammenfassung**

Dargestellt und beschrieben ist ein Verfahren zur Einbindung eines Produktionsmoduls in ein modulares Produktionssystem. Erfindungsgemäß ist vorgesehen, dass wenigstens eine sicherheitsrelevante Komponente des Produktionsmoduls kommunikativ und/oder signaltechnisch mit einer zentralen Steuerung verbunden wird und dann von einem in der zentralen Steuerung (5) abgelegten Sicherheitsprogramm automatisiert erkannt und in eine Überwachung einbezogen zu werden.

## Beschreibung

Die vorliegende Erfindung betrifft ein Verfahren zur Einbindung eines Produktionsmoduls in ein modulares Produktionssystem, umfassend die folgenden Schritte:
Bereitstellen einer Produktionsanlage mit mindestens einer freien anlagenseitigen Schnittstelle und einer zentralen Steuerung, welche sicherheitsrelevante Komponenten des Produktionssystems überwacht;
Bereitstellen eines Produktionsmoduls, welches eine zu der anlagenseitigen Schnittstelle korrespondierende modulseitige Schnittstelle, mindestens eine Steuereinheit und wenigstens eine zu überwachende sicherheitsrelevante Komponente, insbesondere mindestens einen Not-Halt-Taster aufweist;
Verbinden des Produktionsmoduls mit der freien Schnittstelle der Produktionsanlage, wobei die Steuereinheit des Produktionsmoduls und die zentrale Steuerung der Produktionsanlage kommunikativ miteinander verbunden werden;
Versorgung des Produktionsmoduls mit einer Steuerspannung, um die Steuereinheit des Produktionsmoduls mit einer Spannung zu versorgen, bevor eine Lastspannung bereitgestellt wird.

Ferner betrifft die Erfindung ein Produktionsmodul zur Verwendung in einem modularen Produktionssystem, sowie ein Produktionssystem umfassend eine Produktionsanlage und mindestens ein Produktionsmodul.

Die Herstellung von Produkten in kleinen Losgrößen erfordert eine häufige Anpassung der Produktionsschritte des eingesetzten Produktionssystems. Konkret kann es erforderlich sein, bei einzelnen Produkten auf Produktionsschritte zu verzichten oder bei anderen Produkten einzelne Produktionsschritte einer Produktionskette hinzuzufügen. Bei den einzelnen Produktionsschritten können prinzipiell verschiedene Fertigungsverfahren zum Einsatz kommen, beispielsweise spanende Fertigungsverfahren, worunter das Drehen, Fräsen, Bohren etc. fällt, thermische Füge- und Trennverfahren, worunter beispielsweise das Schweißen fällt, Umformverfahren, worunter das Stanzen, Tiefziehen etc. fällt, oder um Montageschritte, für welche zumeist eine gezielte Handhabung von Werkstücken erforderlich ist. Eine derartige Werkstückhandhabung kann vorzugsweise über Roboter realisiert werden.

Um eine Fertigung mit kleinen Losgrößen effektiv betreiben zu können, greift man oft auf sogenannte modulare Produktionssysteme zurück. Ein solches Produktionssystem umfasst eine Produktionsanlage, welche mehrere Schnittstellen zum Anbringen von verschiedenen Produktionsmodulen aufweist. Durch die einfache Anpassbarkeit des Produktionssystems kann auch bei kleinen Losgrößen eine effektive Fertigung betrieben werden.

Ein derartiges Produktionssystem benötigt wie jede andere Fertigungsanlage sicherheitsrelevante Komponenten, beispielsweise Not-Halt-Taster, um einen sicheren Betrieb zu gewährleisten und Unfälle sowie die Produktion von Ausschuss zu vermeiden.

Bei einem modularen Produktionssystem erweist sich dabei das Hinzufügen bzw. Entfernen von Produktionsmodulen zumeist als schwierig, da dies in der Regel mit einer Unterbrechung des Produktionsprozesses einhergeht. Insbesondere die Überwachungseinrichtungen und sicherheitsrelevanten Komponenten können bei einer Umkonfiguration der Anlage nicht automatisch berücksichtigt werden. Im Einzelnen bedeutet dies, dass stets eine Produktionsunterbrechung notwendig ist, um ein neues Produktionsmodul in das Sicherheitsprogramm einzubinden und somit die in einem neuen Produktionsmodul enthaltenen sicherheitsrelevanten Komponenten in die Überwachung einzubeziehen. Gleiches gilt für das Entfernen eines Produktionsmoduls.

Dieses Problem wird zum Teil dadurch umgangen, dass die Sicherheitsprogramme und somit die Überwachung der sicherheitsrelevanten Komponenten lediglich auf Modulebene stattfinden. Dies ist jedoch mit dem Nachteil verbunden, dass ein Not-Halt in einem Modul keine Auswirkung auf den Betriebszustand der anderen, insbesondere der benachbarten Module hat.

Aufgabe der vorliegenden Erfindung ist daher, ein Verfahren zur Einbindung eines Produktionsmoduls in ein modulares Produktionssystem zu schaffen, welches die vorgenannten Nachteile vermeidet und insbesondere eine Einbindung eines neuen Produktionsmoduls ermöglicht, ohne dass eine Unterbrechung der Produktion erforderlich ist.

Diese Aufgabe ist bei einem Verfahren der eingangs genannten Art dadurch gelöst, dass wenigstens eine, insbesondere jede, sicherheitsrelevante Komponente des Produktionsmoduls kommunikativ und/oder signaltechnisch mit der zentralen Steuerung verbunden wird, von dem Sicherheitsprogramm automatisiert erkannt wird und in die von der zentralen Steuerung durchgeführte Überwachung einbezogen wird.

Der Erfindung liegt die grundlegende Überlegung zugrunde, die modulseitige Schnittstelle nach dem mechanischen Verbinden mit der anlagenseitigen Schnittstelle zunächst in an sich bekannter Weise nur mit einer Steuerspannung zu versorgen, so dass die Steuereinheit des Produktionsmoduls aktiviert wird. Auf diese Weise können sich die in dem Produktionsmodul enthaltenen sicherheitsrelevanten Komponenten, zum Beispiel Not-Halt-Taster, Lichtgitter, Laserscanner und/oder Totmannschalter, direkt oder über die Steuereinheit des Produktionsmoduls kommunikativ mit der zentralen Steuerung der Produktionsanlage koppeln, so dass sie durch ein Sicherheitsprogramm, welches in der zentralen Steuerung abläuft, automatisiert erkannt werden. Im Ergebnis erkennt die Steuerung bzw. das darin angelegte/ablaufende Sicherheitsprogramm ein angebrachtes Produktionsmodul durch die Verbindung mit dessen Steuereinheit und bezieht automatisch die sicherheitsrelevanten Komponenten des angebrachten Produktionsmoduls in die Überwachung mit ein.

Dadurch, dass zunächst lediglich eine Steuerspannung angelegt wird, werden Fertigungskomponenten des Produktionsmoduls nicht betätigt, so dass das Risiko einer unbeabsichtigten Betriebsaufnahme ausgeschlossen ist. Konkret kann die kommunikative/signaltechnische Verbindung der sicherheitsrelevanten Komponente des Produktionsmoduls mit der zentralen Steuerung als fehlersichere Verbindung zwischen zwei Steuerungen, insbesondere zwischen der Steuereinheit und der zentralen Steuerung, hergestellt werden. Bevorzugt fungiert dabei die mindestens eine Steuereinheit des Produktionsmoduls als fehlersichere Peripherieeinheit.

Erfindungsgemäß ist es somit möglich ein Produktionsmodul in ein Produktionssystem einzubringen, ohne den Betrieb des Produktionssystems nennenswert zu unterbrechen.

In weiterer Ausgestaltung des Verfahrens kann vorgesehen sein, dass der Zustand der in die Überwachung einbezogenen sicherheitsrelevanten Komponente(n) des Produktionsmoduls durch die Steuereinheit des Produktionsmoduls und/oder durch die zentrale Steuerung der Produktionsanlage ausgewertet wird. Somit wird im Anschluss an das Anlegen der Steuerspannung und das Einbeziehen der sicherheitsrelevanten Komponente(n) des Produktionsmoduls in die Überwachung durch das Sicherheitsprogramm die sicherheitsrelevanten Komponente(n) zunächst im Hinblick auf ihren Zustand überprüft. Beispielsweise kann dabei ausgewertet werden, ob sämtliche erforderlichen Schutzeinhausungen sich in ihrem für die produktive Inbetriebnahme des Produktionsmoduls erforderlichen Zustand befinden.

Konkret kann das Auswerten des Zustands der in die Überwachung einbezogenen sicherheitsrelevanten Komponenten die Überwachung eines Not-Halt-Tasters umfassen. In weiterer Ausgestaltung kann das Auswerten des Zustands der sicherheitsrelevanten Komponenten des Produktionsmoduls die Überwachung des Beleuchtungszustands eines beleuchtbaren Not-Halt-Tasters umfassen. Bei Not-Halt-Tastern handelt es sich um in höchstem Maße sicherheitsrelevante Komponenten, da sie dem Bediener die Möglichkeit geben, bei Unfallgefahr den Produktionsprozess sofort zu unterbrechen. Insbesondere wird dadurch erreicht, dass bewegte Teile, beispielsweise bei einer spanenden Bearbeitung eine sich drehende Spindel oder bei der Werkstückhandhabung ein Roboter, sofort zum Stillstand kommen. Bei einem aktiv beleuchteten Not-Halt-Taster bietet sich ferner eine insbesondere fehlersichere Zustandsüberwachung des Leuchtmittels an, so dass für den Anlagenbediener unmittelbar ersichtlich ist, ob das betreffende Produktionsmodul bereits in das Sicherheitsprogramm integriert ist oder nicht.

Demzufolge ist vorgesehen, dass erst nach dem Auswerten des Zustands der in die Überwachung einbezogenen sicherheitsrelevanten Komponenten des Produktionsmoduls eine Lastspannung zum Betrieb des Produktionsmoduls nur dann freigegeben wird, wenn die Auswertung einen sicheren und/oder störungsfreien Zustand sämtlicher in die Überwachung einbezogenen Komponenten ergibt. Dieser Ausgestaltung des erfindungsgemäßen Verfahrens liegt die grundsätzliche Überlegung zugrunde, eine vollständige Trennung zwischen der Versorgung mit einer Steuerspannung und der Versorgung mit einer Lastspannung vorzunehmen. Aus Sicherheitsgründen wird die Lastspannung erst dann freigegeben, wenn gewährleistet ist, dass die sicherheitsrelevanten Komponenten des Produktionsmoduls in die Überwachung durch das Sicherheitsprogramm einbezogen wurden und sich die sicherheitsrelevanten Komponenten in einem Zustand befinden, welcher den Start des Produktionsbetriebs gestattet. Somit ist ausgeschlossen, dass zu einem Zeitpunkt, in welchem die sicherheitsrelevanten Komponenten in einem dafür ungeeigneten Zustand sind, eine Lastspannung dem Produktionsmodul zur Verfügung gestellt wird.

Bevorzugt erfolgt die Freigabe der Lastspannung anlagenseitig oder modulseitig über ein Schütz und/oder über ein Relais. Durch die Freischaltung über ein Schütz oder ein Relais, welches bevorzugt von einem Ausgang, insbesondere über einen fehlersicheren Ausgang, der im Produktionsmodul angeordneten Steuereinheit geschaltet wird, wird eine Spannungstrennung zwischen dem Steuerungsbereich und dem Lastspannungsbereich realisiert.

Alternativ oder ergänzend kann nach der Auswertung der in die Überwachung einbezogenen sicherheitsrelevanten Komponenten des Produktionsmoduls eine Freigabe von Medien, insbesondere von mindestens einem druckbeaufschlagten Fluid, zum Betrieb des Produktionsmoduls erfolgen. Neben der Möglichkeit, eine Lastspannung zum Antrieb elektrischer Geräte, insbesondere Motoren bereitzustellen, besteht ferner die Möglichkeit, fluidgetriebene Komponenten im Produktionsmodul vorzusehen. Beispielsweise kann es sich hierbei um druckluftbetriebene Werkzeuge oder dergleichen handeln. Dazu kann in ähnlicher Weise wie hinsichtlich der Lastspannung die Freigabe über ein entsprechendes Schaltventil erfolgen. Dieses kann sowohl von der Steuereinheit des Produktionsmoduls als auch von der zentralen Steuerung der Produktionsanlage angesteuert werden. Das entsprechende Ventil kann dabei in der Produktionsanlage oder in dem Produktionsmodul angeordnet sein. Alternativ oder ergänzend können auch andere Betriebsstoffe auf diese Weise dem Produktionsmodul zur Verfügung gestellt werden, beispielsweise Kühlschmiermittel für die mechanische Bearbeitung, insbesondere für die spanende Bearbeitung von Werkstücken

In an sich bekannter Weise kann die Versorgung der Steuereinheit des Produktionsmoduls mit einer Steuerspannung als Gleichspannung von 24 Volt und/oder als Wechselspannung insbesondere zwischen 220 und 240 Volt erfolgen. Dabei handelt es sich um übliche Spannungen zum Betreiben von Steuereinheiten, insbesondere von speicherprogrammierbaren Steuerungen (SPS) .

Ferner kann das erfindungsgemäße Verfahren die Zuweisung einer IP-Adresse, insbesondere einer eindeutigen IP-Adresse, an das Produktionsmodul umfassen. Durch die Vergabe einer eindeutigen IP-Adresse werden IP-Konflikte beim Anbinden neuer Produktionsmodule verhindert. Ferner lassen sich durch die Vergabe einer IP-Adresse auch größere Produktionssysteme mit einer Vielzahl von Produktionsmodulen realisieren. Eine eindeutige IP-Adresse stellt dabei sicher, dass innerhalb des Produktionssystems keine Adresskonflikte auftreten können.

Die der Erfindung zugrundeliegende Aufgabe wird ferner gelöst durch ein Produktionsmodul zur Verwendung in einem modularen Produktionssystem, mit mindestens einer Steuereinheit, insbesondere mindestens einer fehlersicheren Steuereinheit, sicherheitsrelevanten Komponenten und einer modulseitigen Schnittstelle zum Verbinden mit einer korrespondierenden anlagenseitigen Schnittstelle einer modularen Produktionsanlage, wobei die Schnittstelle Verbindungsmittel zum Übertragen einer Steuerspannung, insbesondere einer Gleichspannung bevorzugt von 24 Volt und/oder einer Wechselspannung bevorzugt zwischen 220 und 240 Volt, sowie Kommunikationsmittel zur kommunikativen und/oder signaltechnischen Verbindung der Steuereinheit und/oder der sicherheitsrelevanten Komponenten mit der anlagenseitigen Schnittstelle aufweist.

Dieser Ausgestaltung des Produktionsmoduls, insbesondere der modulseitigen Schnittstelle, liegt die Überlegung zugrunde, über eine universelle Schnittstelle verschiedenartige Produktionsmodule an einer Produktionsanlage anbringen zu können. Die Schnittstelle ist dabei einheitlich ausgebildet und umfasst Verbindungsmittel zum Übertragen einer Steuerspannung, durch welche gemäß dem erfindungsgemäßen Verfahren zunächst die Steuereinheit des Produktionsmoduls aktiviert wird, um eine Einbindung in das Sicherheitsprogramm der zentralen Steuerung der Produktionsanlage durchführen zu können. Davon getrennt ist in der Schnittstelle die kommunikative Verbindung der Steuereinheit bzw. der sicherheitsrelevanten Komponenten mit der anlagenseitigen Schnittstelle realisiert.

In bevorzugter Ausgestaltung des erfindungsgemäßen Produktionsmoduls ist vorgesehen, dass die modulseitige Schnittstelle ferner Verbindungsmittel zum Übertragen einer Lastspannung, insbesondere für eine Wechselspannung zwischen 220 und 240 Volt aufweist. Derartige Lastspannungen werden üblicherweise für den Betrieb elektrischer Geräte eingesetzt. Denkbar ist auch, geeignete Verbindungsmittel zum Übertragen von Drehströmen vorzusehen.

In konkreter Ausgestaltung können die Verbindungsmittel zum Übertragen einer Steuerspannung und/oder die Verbindungsmittel zum Übertragen einer Lastspannung als Steckverbindungselemente, insbesondere als mehrpolige Steckverbindungselemente ausgebildet sein. Derartige, insbesondere in der Schnittstelle ausgebildete Steckverbindungselemente ermöglichen eine einfache und sichere Verbindung zwischen den beiden Schnittstellen und gleichzeitig die Übertragung hoher Ströme insbesondere im Bereich der Lastspannung.

Bevorzugt sind die Kommunikationsmittel als Steckverbindungselemente, insbesondere als mehrpolige Steckverbindungselemente in Form eines USB-Anschlusses und/oder als LAN-Anschluss und/oder als RS232-Schnittstelle und/oder als RS485-Schnittstelle ausgebildet. Dabei handelt es sich um übliche Schnittstellen zur Kommunikation elektrischer Geräte, insbesondere Steuerungen, untereinander.

In weiterer Ausgestaltung dieser Ausführungsform können für die Verbindung der Steuereinheit mit der anlagenseitigen Schnittstelle und der sicherheitsrelevanten Komponenten mit der anlagenseitigen Schnittstelle separate Steckverbindungselemente vorgesehen sein. Dadurch wird ein nachvollziehbarer Aufbau der Steuerung realisiert, ohne dass die Gefahr von Fehlanschlüssen besteht. Bevorzugt handelt es sich bei den entsprechenden Steckverbindungselementen um unterschiedliche Ausführungsformen, so dass ein versehentlicher Anschluss der Lastspannung an einem vorgesehenen Steckverbindungselement für eine Steuerspannung von vornherein ausgeschlossen ist.

Zum Positionieren des Produktionsmoduls relativ zu der anlagenseitigen Schnittstelle einer Produktionsanlage kann die modulseitige Schnittstelle ferner Positioniermittel aufweisen. In bevorzugter Ausgestaltung umfassen diese mindestens zwei Positionierdorne, welche zum Eingriff in korrespondierende Öffnungen einer anlagenseitigen Schnittstelle vorgesehen sind. Dadurch wird eine eindeutige und präzise Positionierung des Produktionsmoduls an der anlagenseitigen Schnittstelle realisiert. Gleichzeitig wird sichergestellt, dass die weiteren Verbindungsmittel, beispielsweise Steckverbindungselemente, beim Zusammenführen sauber aufeinanderliegen und somit Beschädigungen an den Steckverbindungselementen vermieden werden.

Ferner kann die modulseitige Schnittstelle Verriegelungsmittel zum Arretieren des Produktionsmoduls an der anlagenseitigen Schnittstelle aufweisen. In an sich bekannter Weise können die Verriegelungsmittel mindestens eine Aussparung zum Eingreifen eines korrespondierenden anlagenseitigen Verriegelungselements umfassen. Beispielsweise kann es sich bei dem anlagenseitigen Verriegelungselement um einen Haken handeln, welcher in einer korrespondierend geformten Aussparung in Eingriff kommt. Auf diese Weise wird das Produktionsmodul an der Produktionsanlage festgehalten, auch wenn durch die Bearbeitung im Produktionsmodul Kräfte und Momente in verschiedene Richtungen auf die Schnittstelle wirken.

Gemäß einer weiteren Ausführungsform kann das Produktionsmodul einen Transponder aufweisen, der mit einem anlageseitigen Näherungsschalter zusammenwirkt, um feststellen zu können, ob das Produktionsmodul auf eine anlagenseitige Schnittstelle aufgesetzt ist. Ebenso kann erkannt werden, wenn sich das aufgesetzte Produktionsmodul unbeabsichtigt von der anlageseitigen Schnittstelle lösen sollte.

Die modulseitige Schnittstelle kann ferner Führungsmittel zum Arretieren an einer anlagenseitigen Schnittstelle aufweisen. Bevorzugt umfassen die Führungsmittel mindestens eine Führungsschiene, insbesondere zwei einander gegenüberliegende Führungsschienen. Derartige Führungsmittel ermöglichen ein gezieltes Einbringen und sorgen neben entsprechenden Positioniermitteln dafür, dass insbesondere bei dem Einsatz von Steckverbindern deren beide Komponenten sauber aufeinander geschoben werden können.

In bevorzugter Ausgestaltung des erfindungsgemäßen Produktionsmoduls umfasst die modulseitige Schnittstelle ferner eine Grundplatte, insbesondere mit einer rechteckigen Grundform. Eine solche Grundplatte ermöglicht eine robuste Ausgestaltung des Produktionsmoduls und stellt eine Möglichkeit dar, die weiteren Elemente der Schnittstelle definiert und präzise anzubringen. Bevorzugt sind die Verbindungsmittel zum Übertragen einer Steuerspannung in der Grundplatte angeordnet und/oder an dieser befestigt. Eine derartige Grundplatte mit daran befestigten Verbindungsmitteln ermöglicht ferner ein einfaches Austauschen, wenn beispielsweise Beschädigungen aufgetreten sind oder Kontakte bei den Verbindungsmitteln verschlissen sind. Zum Ausgleich von Toleranzen und zur Vermeidung von Blockaden bei der Montage ist die Grundplatte bevorzugt federnd an einem Grundkörper des Produktionsmoduls befestigt.

Analog zu den Verbindungsmitteln für eine Lastspannung kann die modulseitige Schnittstelle ferner Kupplungsmittel zum fluiddichten Verbinden mit einer anlagenseitigen Fluidleitung aufweisen. Dieser Ausgestaltung liegt die Überlegung zugrunde, dass grundsätzlich neben elektrischen Geräten in einem Produktionsmodul auch fluidbetriebene, insbesondere druckluftbetriebene Geräte zum Einsatz kommen können. So ist die Möglichkeit eines fluiddichten Verbindens mit einer anlagenseitigen Fluidleitung erforderlich.

In bevorzugter Ausgestaltung der Erfindung umfassen die sicherheitsrelevanten Komponenten mindestens einen Not-Halt-Taster, insbesondere mindestens einen beleuchtbaren Not-Halt-Taster und/oder insbesondere mindestens einen fehlersicheren Not-Halt-Taster. Ein beleuchtbarer Not-Halt-Taster ermöglicht es dem Bediener, zu erkennen, dass die das Produktionsmodul gemäß dem erfindungsgemäßen Verfahren ordnungsgemäß in das Sicherheitsprogramm der zentralen Steuerung integriert wurde. Neben Not-Aus-Tastern können die sicherheitsrelevanten Komponenten ferner Abschirmungen und Einhausungen umfassen, welche durch entsprechende Sensoren überwacht werden.

In an sich bekannter Weise können die sicherheitsrelevanten Komponenten mit der Steuereinheit kommunikativ verbunden sein. Die Verbindung kann dabei über standardisierte Schnittstellen, wie beispielsweise eine RS232-Schnittstelle erfolgen, oder über digitale Eingangs- und Ausgangssignale sowie über analoge Eingangs- und Ausganssignale. Zusätzlich/alternativ können Lichtgitter, Laserscanner, Totmannschalter als sicherheitsrelevante Komponenten vorgesehen sein.

Die der Erfindung zugrundeliegende Aufgabe wird ferner gelöst durch ein Produktionssystem umfassend eine Produktionsanlage mit einer Mehrzahl anlagenseitiger Schnittstellen zum Anbringen von Produktionsmodulen und mindestens ein Produktionsmodul gemäß der vorliegenden Erfindung. In weiterer Ausgestaltung weist die Produktionsanlage eine zentrale Steuerung, insbesondere eine fehlersichere zentrale Steuerung auf. Eine fehlersichere zentrale Steuerung, wie auch eine fehlersichere Steuerungseinheit im Produktionsmodul kann beispielsweise eine speicherprogrammierbare Steuerung umfassen, welche mit zwei voneinander unabhängigen Rechnereinheiten (CPU) betrieben wird. Beispielsweise kann es sich dabei um Simatic-Steuerungen der Siemens AG handeln, insbesondere in Form einer S7-1200 oder einer S7-1500.

In weiterer Ausgestaltung der Erfindung weisen die anlagenseitigen Schnittstellen jeweils einen Näherungsschalter, insbesondere einen fehlersicheren Näherungsschalter auf. Unter Fehlersicherheit versteht man, dass die betreffende elektrische Komponente über eine weitere Absicherung verfügt, wenn sie ausfällt. Beispielsweise kann ein fehlersicherer Näherungsschalter mehrere Ein- und Ausgänge aufweisen, die gegen Ausfall überwacht werden. Fällt ein Eingang oder Ausgang aus, so können Signale nach wie vor über einen weiteren Eingang oder Ausgang übertragen werden. Gleichzeitig ist ein Mechanismus vorgesehen, welcher erkennt, dass ein Ausfall vorliegt und dies der Steuerung mitteilt. Durch einen Näherungsschalter, welcher in die anlagenseitige Schnittstelle integriert ist, kann erkannt werden, dass das Produktionsmodul auf die anlagenseitige Schnittstelle aufgesetzt ist. Ferner wird erkannt, wenn sich das aufgesetzte Produktionsmodul einmal unbeabsichtigt von der anlageseitigen Schnittstelle lösen sollte.

Weitere Merkmale und Vorteile der vorliegenden Erfindung werden anhand der nachfolgenden Beschreibung eines erfindungsgemäßen Produktionssystems und des erfindungsgemäßen Verfahrens unter Bezugnahme auf die beiliegende Zeichnung deutlich. In der Zeichnung zeigt:
- FIG 1: ein Produktionssystem gemäß der vorliegenden Erfindung in einer schematischen Darstellung;
- FIG 2: eine modulseitige Schnittstelle eines Produktionsmoduls gemäß der vorliegenden Erfindung in perspektivischer Darstellung.

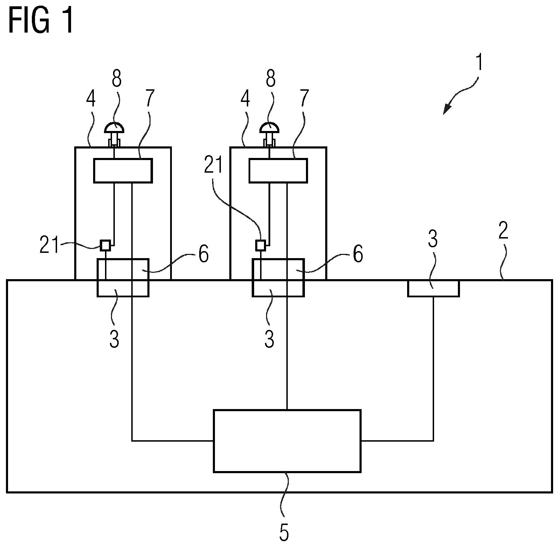

Die FIG 1 zeigt ein Produktionssystem 1 gemäß der vorliegenden Erfindung mit einer Produktionsanlage 2, welche mehrere, vorliegend drei anlagenseitige Schnittstellen 3 zum Anbringen von Produktionsmodulen 4 aufweist. Ferner besitzt die Produktionsanlage 2 eine fehlersichere zentrale Steuerung 5, die mit den anlagenseitigen Schnittstellen 3 kabelgebunden kommunikativ verbunden ist.

Die beiden dargestellten Produktionsmodule 4 sind durch eine modulseitige Schnittstelle 6 mit der jeweiligen anlagenseitigen Schnittstelle 3 verbunden. Ferner besitzt jedes Produktionsmodul 4 eine fehlersichere Steuereinheit 7 und sicherheitsrelevante Komponenten, hier jeweils genau einen Not-Halt-Taster 8. Die Not-Halt-Taster 8 sind mit der Steuereinheit 7 des jeweiligen Produktionsmoduls 4 kommunikativ verbunden.

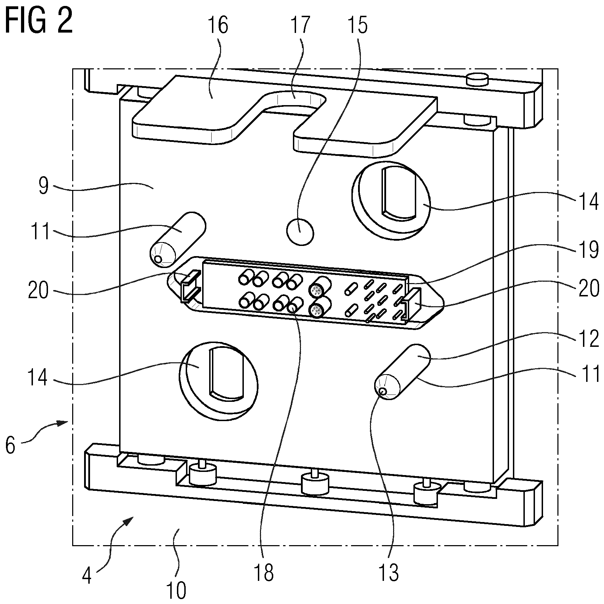

In FIG 2 ist die modulseitige Schnittstelle 6 eines Produktionsmoduls 4 im Detail dargestellt. Diese umfasst zunächst eine Grundplatte 9, welche federnd an einem Grundkörper 10 des Produktionsmoduls 4 befestigt ist. Die Grundplatte 9 besitzt eine im Wesentlichen rechteckig, hier quadratische Grundform mit mehreren Öffnungen, in welchen Verbindungselemente angeordnet sind.

Von der Vorderseite der Grundplatte 9 ragen zwei zueinander versetzt angeordnete Positionierdorne 11 ab, welche zum Eingriff in korrespondierende Öffnungen einer anlagenseitigen Schnittstelle 3 vorgesehen sind. Die Positionierdorne 11 besitzen ausgehend von der Grundplatte 10 einen zylindrischen Abschnitt 12 und am freien Ende eine kegelförmig ausgebildete Dornspitze 13. Die Dornspitze 13 bewirkt, dass beim Einschieben auf eine korrespondierende Öffnung einer anlagenseitigen Schnittstelle 3 eine exakte Zentrierung der Positionierdorne 11 in der korrespondierenden Öffnung stattfindet.

Die modulseitige Schnittstelle 6 besitzt ferner Verriegelungsmittel zum Arretieren des Produktionsmoduls 4 an der anlagenseitigen Schnittstelle 3. Diese umfassen hier zwei Aussparungen 14 zum Eingreifen eines korrespondierenden anlagenseitigen Verriegelungselements, vorliegend eines nicht dargestellten Verriegelungsbolzens. Anlageseitig sind nicht im Detail dargestellte Rollenschalter vorgesehen, mittels derer erkannt werden kann, ob ein Verriegelungsbolzen in Eingriff in der jeweiligen Aussparung 14 ist. Die Rollenschalter sind kommunikativ mit der zentralen Steuerung 5 verbunden.

Des Weiteren weist die modulseitige Schnittstelle 6 einen Transponder 15 auf, welcher mit einem anlageseitigen Näherungsschalter zusammenwirkt, der wiederum kommunikativ mit der zentralen Steuerung 5 verbunden ist und die Aufgabe hat, über das Zusammenwirken mit dem Transponder 15 die Anlage einer modulseitigen Schnittstelle 6 zu erkennen.

An der in der FIG 2 oben dargestellten Seite der modulseitigen Schnittstelle 6 ist ferner eine Führungsschiene 16 angeordnet, welche die Aufgabe hat, eine grobe Positionierung gegenüber der anlagenseitigen Schnittstelle 3 vorzunehmen, bevor die Positionierdorne 11 mit den anlageseitigen Öffnungen in Eingriff kommen. Die Führungsschiene 16 besitzt eine zentrale Ausnehmung 17, mit welcher ein korrespondierendes Gegenelement der anlagenseitigen Schnittstelle 3 in Eingriff gebracht werden kann.

In der Grundplatte 9 sind an definierter Position ferner Verbindungsmittel zum Übertragen einer Steuerspannung, zum Übertragen einer Lastspannung und Kommunikationsmittel zur kommunikativen Verbindung der Steuereinheit mit der anlagenseitigen Schnittstelle ausgebildet. Diese umfassen mehrere Steckverbinder 18, welche auf einer entsprechenden Trägerplatte 19 angeordnet sind, die wiederum in einer Öffnung der Grundplatte 9 positioniert ist. An den beiden Stirnseiten der Trägerplatte 19 ist jeweils ein Führungsprofil 20 vorgesehen, das sich in senkrechter Richtung zur Unterseite der Trägerplatte 19 erstreckt. Dadurch wird eine saubere Positionierung der Steckverbinder 18 zu entsprechenden Gegenelementen der anlagenseitigen Schnittstelle 3 realisiert.

Soll ein Produktionsmodul 4 an eine unbesetzte anlagenseitige Schnittstelle 3 der Produktionsanlage 2 angebracht werden, wird zunächst die mechanische Verbindung des Produktionsmoduls 4 mit der freien Schnittstelle 3 der Produktionsanlage 2 hergestellt, wobei zunächst eine Grobpositionierung des Produktionsmoduls 4 über die Führungsschiene 16 erfolgt, die exakte Positionierung durch den Eingriff der Positionierdorne 11 vorgenommen wird und die Steckverbinder 18 des Führungsprofils 20 exakt ausgerichtet werden. Dabei werden über die entsprechenden Steckverbinder 18 die zentrale Steuerung der Produktionsanlage 2 und die Steuereinheit 7 des Produktionsmoduls 4 kommunikativ miteinander verbunden.

In einem nächsten Schritt wird das Produktionsmodul 4 mit einer Steuerspannung, vorliegend mit einer Gleichspannung von 24 Volt, versorgt, um die Steuereinheit 7 des Produktionsmoduls 4 mit einer Spannung zu versorgen und diese zu aktivieren.

Dadurch können die Steuereinheit 7 des Produktionsmoduls 4 und die zentrale Steuerung 5 der Produktionsanlage 2 miteinander kommunizieren. Des Weiteren kann der Steuereinheit 7 des Produktionsmoduls 4 durch die zentrale Steuerung 5 eine eindeutige IP-Adresse zugewiesen werden.

Die zentrale Steuerung 5 führt eine Überwachung sicherheitsrelevanter Komponenten des Produktionssystems 1 durch. Hierzu ist in den Steuerung 5 ein entsprechendes Sicherheitsprogramm abgelegt. Insbesondere handelt es sich dabei um ein Programm, welches die Not-Halt-Taster 8 und ggf. weitere sicherheitsrelevante Komponenten fehlersicher überwacht und dafür sorgt, dass bei Betätigung eines Not-Halt-Tasters 8 das gesamte Produktionssystem sofort angehalten wird.

Nach der Zuweisung einer IP-Adresse an das Produktionsmodul 4 werden die sicherheitsrelevanten Komponenten des Produktionsmoduls 4 automatisch von dem Sicherheitsprogramm der zentralen Steuerung 5 erkannt und in die Überwachung einbezogen.

Der Zustand der in die Überwachung einbezogenen sicherheitsrelevanten Komponenten des Produktionsmoduls 4 wird durch die zentrale Steuerung 5 der Produktionsanlage 2 ausgewertet. Befinden sich die sicherheitsrelevanten Komponenten des Produktionsmoduls 4 in einem sicheren/störungsfreien Zustand, welcher die Aufnahme des Betriebs des Produktionsmoduls 4 gestattet, so wird durch die zentrale Steuerung 5 eine Lastspannung zum Betrieb des Produktionsmoduls 4 freigegeben. Vorliegend erfolgt dies über ein Schütz 21, welches im Produktionsmodul 4 angeordnet ist.

Auf diese Weise wird sichergestellt, dass eine Aufnahme des Betriebs des Produktionsmoduls 4 nur dann erfolgen kann, wenn sich alle sicherheitsrelevanten Komponenten in einem sicheren/störungsfreien Zustand befinden. Gleichzeitig ist eine Betriebsunterbrechung nicht erforderlich, da das Sicherheitsprogramm der zentralen Steuerung 5 automatisch ein neu eingesetztes Produktionsmodul 4 erkennt und dessen sicherheitsrelevante Komponenten automatisiert in die Überwachung einbezieht.

Im Ergebnis ist es möglich ein Produktionsmodul in ein Produktionssystem einzubringen, ohne den Betrieb des Produktionssystems nennenswert zu unterbrechen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Einbindung eines Produktionsmoduls in ein modulares Produktionssystem (1), umfassend die folgenden Schritte:
Bereitstellen einer Produktionsanlage (2) mit mindestens einer freien anlagenseitigen Schnittstelle (3) und einer zentralen Steuerung (5), welche sicherheitsrelevante Komponenten des Produktionssystems (1) überwacht;
Bereitstellen eines Produktionsmoduls (4), welches eine zu der anlagenseitigen Schnittstelle (3) korrespondierende modulseitige Schnittstelle (6), mindestens eine Steuereinheit (7) und wenigstens eine zu überwachende sicherheitsrelevante Komponente, insbesondere mindestens einen Not-Halt-Taster (8), aufweist;
Verbinden des Produktionsmoduls (4) mit der freien Schnittstelle der Produktionsanlage (2), wobei die Steuereinheit (7) des Produktionsmoduls (4) und die zentrale Steuerung (5) der Produktionsanlage (2) kommunikativ miteinander verbunden werden;
Versorgung des Produktionsmoduls (4) mit einer Steuerspannung, um die Steuereinheit (7) des Produktionsmoduls (4) mit einer Spannung zu versorgen, bevor eine Lastspannung bereitgestellt wird;
wobei das Verfahren **dadurch gekennzeichnet ist, dass** wenigstens eine, insbesondere jede, sicherheitsrelevante Komponente des Produktionsmoduls (4) kommunikativ und/oder signaltechnisch mit der zentralen Steuerung (5) verbunden wird, von dem Sicherheitsprogramm automatisiert erkannt wird und in die von der zentralen Steuerung (5) durchgeführte Überwachung einbezogen wird.

2. Verfahren nach Anspruch 1, **dadurch gekennzeichnet, dass** der Zustand der in die Überwachung einbezogenen sicherheitsrelevanten Komponente(n) des Produktionsmoduls (4) durch die Steuereinheit (7) des Produktionsmoduls (4) und/oder durch die zentrale Steuerung (5) der Produktionsanlage (2) ausgewertet wird, und/oder dass das Auswerten des Zustands der in die Überwachung einbezogenen sicherheitsrelevanten Komponente(n) die Überwachung eines Not-Halt-Tasters (8) umfasst, wobei insbesondere das Auswerten des Zustands der sicherheitsrelevanten Komponenten des Produktionsmoduls (4) die Überwachung des Beleuchtungszustands eines beleuchtbaren Not-Halt-Tasters (8) umfasst.

3. Verfahren nach Anspruch 2, **dadurch gekennzeichnet, dass** nach dem Auswerten des Zustands der in die Überwachung einbezogenen sicherheitsrelevanten Komponente(n) des Produktionsmoduls (4) eine Lastspannung zum Betrieb des Produktionsmoduls (4) nur dann freigegeben wird, wenn die Auswertung einen sicheren und/oder störungsfreien Zustand sämtlicher in die Überwachung einbezogenen Komponenten ergibt, wobei insbesondere die Freigabe der Lastspannung anlagenseitig oder modulseitig über ein Schütz (21) und/oder über ein Relais erfolgt.

4. Verfahren nach Anspruch 2, **dadurch gekennzeichnet, dass** nach der Auswertung der in die Überwachung einbezogenen sicherheitsrelevanten Komponente(n) des Produktionsmoduls (4) eine Freigabe von Medien, insbesondere von mindestens einem druckbeaufschlagten Fluid, zum Betrieb des Produktionsmoduls (4) erfolgt.

5. Verfahren nach einem der vorherigen Ansprüche, **dadurch gekennzeichnet, dass** die Versorgung der Steuereinheit (7) des Produktionsmoduls (4) mit einer Steuerspannung als Gleichspannung von 24 V und/oder als Wechselspannung zwischen 220 und 240 V erfolgt und/oder dass dieses ferner die Zuweisung einer IP-Adresse, insbesondere einer eindeutigen IP-Adresse, an das Produktionsmodul (4) umfasst.

6. Produktionsmodul (4) zur Verwendung in einem modularen Produktionssystem (1), mit
mindestens einer Steuereinheit (7), insbesondere mindestens einer fehlersicheren Steuereinheit (7), sicherheitsrelevanten Komponenten und
einer modulseitigen Schnittstelle (6) zum Verbinden mit einer korrespondieren anlagenseitigen Schnittstelle (3) einer modularen Produktionsanlage (2),
wobei die modulseitige Schnittstelle (6) Verbindungsmittel zum Übertragen einer Steuerspannung, insbesondere einer Gleichspannung von 24 V und/oder einer Wechselspannung zwischen 220 und 240 V, sowie Kommunikationsmittel zur kommunikativen und/oder signaltechnischen Verbindung der Steuereinheit (7) und/oder der sicherheitsrelevanten Komponenten mit der anlagenseitigen Schnittstelle (3)aufweist.

7. Produktionsmodul (4) nach Anspruch 6, **dadurch gekennzeichnet, dass** die Verbindungsmittel zum Übertragen einer Steuerspannung und/oder die Verbindungsmittel zum Übertragen einer Lastspannung als Steckverbindungselemente (18), insbesondere als mehrpolige Steckverbindungselemente (18) ausgebildet sind.

8. Produktionsmodul (4) nach Anspruch 6 oder 7, **dadurch gekennzeichnet, dass** die Kommunikationsmittel als Steckverbindungselemente (18), insbesondere als mehrpolige Steckverbindungselemente (18), bevorzugt in Form eines USB-Anschlusses und/oder als LAN-Anschluss und/oder als RS232-Schnittstelle und/oder als RS485-Schnittstelle ausgebildet sind, wobei insbesondere für die Verbindung der Steuereinheit (7) mit der anlagenseitigen Schnittstelle (3) und der sicherheitsrelevanten Komponenten mit der anlagenseitigen Schnittstelle (3) separate Steckverbindungselemente (18) vorgesehen sind.

9. Produktionsmodul (4) nach einem der Ansprüche 6 bis 8, **dadurch gekennzeichnet, dass** die modulseitige Schnittstelle (6) ferner Positioniermittel zum Positionieren des Produktionsmoduls (4) relativ zu der anlagenseitigen Schnittstelle (3) einer Produktionsanlage (2) aufweist, wobei insbesondere die Positioniermittel mindestens zwei Positionierdorne (11) umfassen, welche zum Eingriff in korrespondierende Öffnungen einer anlagenseitigen Schnittstelle (3) vorgesehen sind.

10. Produktionsmodul (4) nach einem der Ansprüche 6 bis 9, **dadurch gekennzeichnet, dass** die modulseitige Schnittstelle (6) ferner Verriegelungsmittel zum Arretieren des Produktionsmoduls (4) an der anlagenseitigen Schnittstelle (3) aufweist, wobei insbesondere die Verriegelungsmittel mindestens eine Aussparung zum Eingreifen eines korrespondierenden anlagenseitigen Verriegelungselements umfassen.

11. Produktionsmodul (4) nach einem der Ansprüche 6 bis 10, **dadurch gekennzeichnet, dass** die modulseitige Schnittstelle (6) ferner Führungsmittel zum Arretieren an einer anlagenseitigen Schnittstelle (3) aufweist, wobei insbesondere die Führungsmittel mindestens eine Führungsschiene, insbesondere zwei einander gegenüberliegende Führungsschienen umfassen.

12. Produktionsmodul (4) nach einem der Ansprüche 6 bis 11, **dadurch gekennzeichnet, dass** die modulseitige Schnittstelle (6) ferner eine Grundplatte (9) insbesondere mit einer rechteckigen Grundform umfasst, wobei die Verbindungsmittel zum Übertragen einer Steuerspannung in der Grundplatte (9) angeordnet sind und/oder an dieser befestigt sind, wobei insbesondere die Grundplatte (9) federnd an einem Grundkörper (10) des Produktionsmoduls (4) befestigt ist.

13. Produktionsmodul (4) nach einem der Ansprüche 6 bis 12, **dadurch gekennzeichnet, dass** die modulseitige Schnittstelle (6) ferner Kupplungsmittel zum fluiddichten Verbinden mit einer anlagenseitigen Fluidleitung aufweist, und/oder dass die sicherheitsrelevanten Komponenten mindestens einen Not-Halt-Taster (8), insbesondere mindestens einen beleuchtbaren Not-Halt-Taster (8) und/oder insbesondere mindestens einen fehlersicheren Not-Halt-Taster (8) umfassen, und/oder dass die sicherheitsrelevanten Komponenten mit der Steuereinheit (7) kommunikativ verbunden sind.

14. Produktionssystem (1) umfassend eine Produktionsanlage (2) mit einer Mehrzahl anlagenseitiger Schnittstellen (3) zum Anbringen von Produktionsmodulen und mindestens ein Produktionsmodul (4) nach einem der Ansprüche 6 bis 12, wobei die Produktionsanlage (2) insbesondere eine zentrale Steuerung (5), bevorzugt eine fehlersichere zentrale Steuerung (5) aufweist.

15. Produktionssystem (4) nach Anspruch 13, **dadurch gekennzeichnet, dass** die anlageseitigen Schnittstellen (6) jeweils einen Näherungsschalter, insbesondere einen fehlersicheren Näherungsschalter aufweisen, wobei insbesondere die Näherungsschalter kommunikativ mit der zentralen Steuerung (5) verbunden sind.
